# EUROPÄISCHE PATENTANMELDUNG

(11) **EP 2 338 624 A2**
(43) Veröffentlichungstag der Anmeldung: **29.06.2011**
(21) Anmeldenummer: 10193232.5
(22) Anmeldetag: 01.12.2010
(51) Int. Cl.: B23B 31/30, B23Q 1/00

(54) **Übertragungseinrichtung**

(30) Priorität: 23.12.2009 DE 102009060142
(71) Anmelder: Hiestand, Karl, 88630 Pfullendorf (DE)
(72) Erfinder: Hiestand, Karl, 88630 Pfullendorf (DE)
(74) Vertreter: Engelhardt & Engelhardt

(57) **Zusammenfassung**

Bei einer Spanneinrichtung (1) für Werkzeugmaschinen (2), die mit einem Kraftspannfutter (3) versehen und einen umschaltbaren elektrischen Servomotor (11) sowie einen Bewegungswandler (21) aufweist, ist der Stator (12) des Servomotors (11) ortsfest abgestützt, dessen Rotor (13) ist ferner über ein zweistufiges Getriebe (41), dessen beide Stufen (I, II) unmittelbar miteinander gekoppelt sind, und den Bewegungswandler (21) mit einer Zugstange (6) trieblich verbunden. Die Übersetzungen der beiden Stufen (I, II) sind reziprok zueinander ausgelegt und die Maschinenspindel (5) der Werkzeugmaschine (2) steht mit den beiden Stufen (I, II) des Getriebes (41) in Triebverbindung, derart, dass die Drehbewegungen der Maschinenspindel (5) in der an den Servomotor (11) angeschlossenen ersten Stufe (I) des Getriebes (41) unwirksam sind.

Durch diese Ausgestaltung wird erreicht, dass die Spanneinrichtung (I) nicht nur kompakt gestaltet werden kann, sondern dass vor allem bei Arbeitsvorgängen ein geringer Energieaufwand erforderlich ist. Der Rotor (13) wird nämlich ausschließlich beim Einspannen und beim Lösen eines Werkstückes (10) durch den Stator (12) angetrieben. Bei der Bearbeitung des eingespannten Werkstückes (10) ist dagegen der Rotor (13) stillgesetzt, durch diesen wird lediglich die Spannkraft aufrechterhalten, so dass die Stromaufnahme des Servomotors (11) bei Bearbeitungsvorgängen gering ist. Außerdem laufen nur wenige Bauteile der Spanneinrichtung (1) mit um. Die Betriebsgeräusche sind daher gering.

## Beschreibung

Die Erfindung bezieht sich auf eine Einrichtung zur Übertragung eines Mediums aus mindestens einer Zuführungsleitung zu einem durch dieses beaufschlagbaren Aggregat, beispielsweise zu einem umlaufenden Spannzylinder, einem Kraftspannfutter oder dergleichen, bestehend aus einem an die Zuführungsleitung angeschlossene, ortsfest angeordneten als Zuführungsring ausgebildeten ersten Bauteil und einem zweiten Bauteil, das mit axialen und radialem Spiel pendelnd in dem ersten Bauteil gelagert ist, wobei zwischen den beiden Bauteilen ein erster und ein zweiter radial gerichteter Dichtspalt vorgesehen sind, das Medium aus einer umlaufenden Ringkammer im Bereich des ersten Dichtspaltes aus dem ersten Bauteil dem zweiten Bauteil zuführbar und vor dem zweiten Dichtspalt eine mit der Ringkammer verbindbare, mit einem Druckraum ausgestattete Regelkammer vorgesehen ist,

Eine Druckmittelzuführungseinrichtung dieser Art ist durch die DE-PS 21 11 355 bekannt. Die in das feststehende erste Bauteil eingearbeitete Ringkammer zur Übertragung des Druckmittels aus dieser in das mit einem Zuführungskanal versehene umlaufende zweite Bauteil ist bei dieser Ausgestaltung als im Querschnitt rechteckige großvolumige Nut ausgebildet, die stirnseitig in das erste Bauteil eingearbeitet und offen ausgebildet ist.

Bei einer Druckmittelübertragung wird somit stets die große axial gerichtete Fläche der Ringkammer von dem Druckmittel beaufschlagt, so dass eine hohe Verstellkraft auf das erste Bauteil in Richtung des zweiten Dichtspaltes einwirkt und dieser bei einer Mediumübertragung sofort geschlossen wird. Bei einer Rückstellung des ersten Bauteils ist jedoch die große Anpresskraft zu überwinden. Da ein Druckaufbau in der Druckkammer nicht in kurzer Zeit erfolgen kann, ist somit ein Einpendeln des ersten Bauteils bei umlaufenden zweitem Bauteil nicht zu bewerkstelligen, sondern nur im Stillstand möglich. Des Weiteren wird bei umlaufendem zweitem Bauteil bei einem Druckaufbau oder bei einer Druckänderung das erste Bauteil mit großer Kraft gegen das zweite Bauteil gepresst, ein hoher Verschleiß durch die metallische Reibung aufgrund der Relativbewegung zwischen beiden Bauteilen ist dabei unvermeidbar. Die bekannte Zuführungseinrichtung weist demnach keine lange Lebensdauer auf und ist nicht vielseitig einsetzbar.

Aufgabe der Erfindung ist es daher, eine Übertragungseinrichtung der vorgenannten Art zu schaffen, bei der durch die in dem ersten Bauteil vorgesehene Ringkammer nahezu keine oder nur geringe axial gerichtete Kräfte hervorgerufen werden, so dass das axial verstellbare Bauteil ohne Schwierigkeiten in einem Schwebezustand einzustellen ist. Ein Aneinanderpressen der beiden Bauteile soll somit vermieden werden, so dass auch nur geringe Reibkräfte auftreten und eine hohe Standzeit gegeben ist. Des Weiteren soll eine einfache und kostengünstige Herstellung der Übertragungseinrichtung ermöglicht werden. Auch soll die Übertragung des Mediums aus dem ersten Bauteil in das zweite Bauteil in kurzer Zeit vorgenommen werden können.

Gemäß der Erfindung wird dies bei einer Einrichtung der vorgenannten Gattung dadurch erreicht, dass die mit der Zuführungsleitung verbundene Ringkammer in einer gesonderten, gegenüber dem Zuführungsring axial verschiebbar abgestützten Ringscheibe eingearbeitet und als rundum nahezu geschlossener Ringraum ausgebildet ist, dass der Ringraum der Ringkammer über einen oder mehrere in die Ringscheibe eingearbeitete Ringspalte an den ersten Dichtspalt angeschlossen ist, und dass in dem zweiten Bauteil eine weitere, durch einen rundum nahezu geschlossenen Ringraum gebildete Ringkammer vorgesehen ist, die über einen oder mehrere Ringspalte mit dem ersten Dichtspalt verbunden ist.

Zweckmäßig ist es hierbei, wenn die Ringräume der Ringkammern jeweils eine geometrische od. polygone Querschnittsfläche aufweisen und z. B. kreisförmig, oval, dreieckig, rechteckig, vorzugsweise quadratisch, oder mehreckig ausgebildet sind, wobei die an die Ringkammern angeschlossenen Dichtspalte parallel zur Längsachse des ersten und zweiten Bauteils verlaufend oder geringfügig in Achsrichtung nach innen oder außen geneigt angeordnet werden können und die Ringspalte in radialer Richtung jeweils etwa auf gleicher Höhe in den ersten Dichtspalt münden sollten.

Die in die Ringscheibe und/oder das zweite Bauteil eingearbeiteten Ringspalte sollten als in Umfangsrichtung verlaufende schlitzförmige Durchbrechungen oder in Form von vorzugsweise gleichmäßig über den Umfang verteilt angeordnete, als segmentartige Ausnehmungen ausgebildet sein.

Des Weiteren ist es angebracht, den ersten Dichtspalt durch den in diesen mündenden Ringspalt derart zu unterteilen, dass die den Dichtspalt begrenzenden radial inneren Flächen gleich oder kleiner bemessen sind als dessen radial äußere Flächen, wobei ferner die von dem Medium beaufschlagte Fläche des der Regelkammer zugeordneten Druckraums gleich oder größer zu bemessen sein sollte als die Dichtflächen des ersten Dichtspaltes. Auch sollte, um Strömungsverluste zu vermeiden und um eine rasche Mediumübertragung sicher zu stellen, die von dem Medium durchströmten Querschnittsflächen der Zuführungsleitungen, der Ringkammern und der Dichtspalte jeweils etwa gleich groß bemessen sein.

Nach einer Weiterbildung ist vorgesehen, in die Ringscheiben jeweils eine umlaufende Freisparung oder eine Aufnahmenut für einen an dem zweiten Bauteil angeformten, radial abstehenden Ansatz einzuarbeiten und in Höhe der Freisparung, bei einem beidseitig von dem Medium beaufschlagten Aggregat in Höhe der Aufnahmenut, Ringkammern in der Ringscheibe und dem Ansatz vorzusehen, die über Ringspalte mit dem von der Ringscheibe und dem Ansatz eingeschlossenen ersten Dichtspalt verbunden sind.

Die mit der Ringkammer versehene Ringscheibe sollte mittels eines in eine in diese eingearbeiteten Längsnut eingreifenden Stiftes drehfest an dem Zuführungsring abgestützt sein.

Zur Zuführung des Mediums in die Ringscheibe ist es angebracht, in diese einen Bolzen einzusetzen, der in dem ersten Bauteil eingespannt und mit an die Zuführungsleitung und die Ringkammer angeschlossenen Kanäle versehen ist.

Eine einfache und kostengünstige Herstellung ist gegeben, wenn die Ringscheibe und/oder ein Teil des zweiten Bauteils als Feingussteile ausgebildet und die in der Ringscheibe und/oder dem zweiten Bauteil vorgesehenen Ringkammern mit Hilfe des Wachs-Ausschmelzverfahrens in diese eingeformt sind.

Zur Einarbeitung der in der Ringscheibe und/oder dem zweiten Bauteil vorgesehenen Ringkammern ist es aber auch möglich, die Ringscheibe und/oder das zweite Bauteil im Bereich der Ringkammern unterteilt auszubilden.

Dazu sollten die Ringscheibe vertikal, vorzugsweise senkrecht zur Längsachse des diese tragenden zweiten Bauteils im Bereich des in die erste Ringkammer mündenden Kanals und/oder das zweite Bauteil im Bereich des von der zweiten Ringkammer abführenden Kanals unterteilt ausgebildet sein, wobei es angebracht ist, den zu der ersten Ringkammer führenden Kanal und/oder den von der zweiten Ringkammer abführenden Kanal jeweils in eine der Stirnflächen der aneinanderliegenden Teile der Ringscheibe bzw. des zweiten Bauteils als offene Freisparungen einzuarbeiten.

Wird eine Einrichtung zur Zuführung eines Mediums aus einem ortsfest angeordneten Bauteil in ein rotierend antreibbares zweites Bauteil gemäß der Erfindung ausgebildet, so wirken auf die axial verschiebbar gelagerte Ringscheibe des ersten Bauteils nur geringe seitlich gerichtete Kräfte ein, so dass die Ringscheibe problemlos zwischen den beiden Endstellungen pendeln kann. In der die Ringscheibe eingearbeiteten als rundum nahezu geschlossener Ringraum ausgebildeten Ringkammer gleichen sich nämlich die auf die Ringscheibe ausgeübten seitlich gerichteten Kräfte weitgehend aus; lediglich im Bereich des zu dem Dichtspalt offenen Ringspaltes wird auf der diesem gegenüberliegenden projizierten Fläche der Ringkammer eine in Richtung des zweiten Dichtspaltes wirkende seitlich gerichtete Kraft erzeugt. Ein geringer Druckaufbau in dem dem ersten Dichtspalt gegenüberliegenden Druckraum ist somit ausreichend, um dieser Kraft entgegen zu wirken und die Ringscheibe in einem Schwebezustand zu halten.

Des Weiteren ist bei der erfindungsgemäßen Ausgestaltung von Vorteil, dass das dem zweiten Bauteil zuzuführende Medium aus der rundum nahezu geschlossenen Ringkammer dennoch über die Umfangsfläche der Ringscheibe dem ersten Dichtspalt strömen kann und von diesem in gleicher Weise in eine in dem zweiten Bauteil vorgesehene, ebenfalls nahezu geschlossene Ringkammer gelangt. Eine schnelle Übertragung des Mediums, auch in einer großen Menge, ist demnach gewährleistet, ohne dass dabei das zweite Bauteil durch eine hohe axial gerichtete Kraft belastet wird. Ein störungsfreier Betrieb über einen langen Zeitraum ist demnach sichergestellt.

Da die vorschlagsgemäße Übertragungseinrichtung konstruktiv einfach gestaltet ist, ist der erforderliche Bauaufwand gering und eine einfache, kostengünstige Herstellung, zumal die Ringkammern nach dem Wachsausschmelzverfahren in Feingussteile eingeformt werden können oder bei geteilter Ringscheibe oder geteiltem zweiten Bauteil problemlos in diese einzuarbeiten sind. Außerdem sind die von dem Medium durchströmten Querschnitte der Verbindungskanäle der Ringkammern und der Ringspalte an die Menge des jeweils übertragenen Mediums ohne Schwierigkeiten anzupassen. Strömungsverluste können auch bei hohen Strömungsgeschwindigkeiten auf diese Weise gering gehalten werden. Ein vielseitiger Einsatz der vorgesehenen Übertragungseinrichtung ist demnach gegeben.

In der Zeichnung sind ein Ausführungsbeispiel der gemäß der Erfindung ausgebildeten Einrichtung zur Übertragung eines Mediums aus einem ortsfest angeordneten ersten Bauteil in ein rotierend antreibbares zweites Bauteil sowie Ausführungsvarianten dargestellt und nachfolgend im Einzelnen erläutert. Hierbei zeigt
- Figur 1: eine zur Übertragung eines Mediums vorgesehene Einrichtung in einem axialen Schnitt
- Figur 2: eine Übertragungseinrichtung für einen doppelseitig beaufschlagbaren Spannzylinder mit eingebauter Einrichtung nach Figur 1, in einem axialen Schnitt,
- Figur 3: einen Schnitt nach der Linie III-III. der Figur 1 im Bereich des ersten Dichtspaltes,

- Figur 4: eine Ausführungsvariante des ersten Dichtspaltes, in einer Darstellung nach Figur 3, und
- Figur 5, 6, u.7.: andersartige Ausbildungen der mit abgewandelten Ausgestaltungen der Ringkammern versehenen Bauteile.

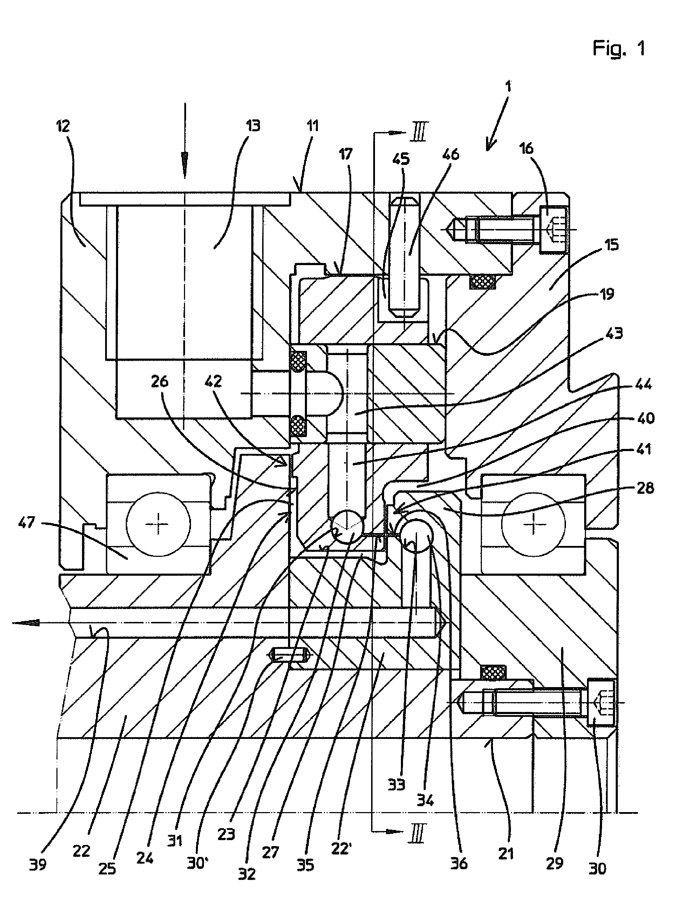

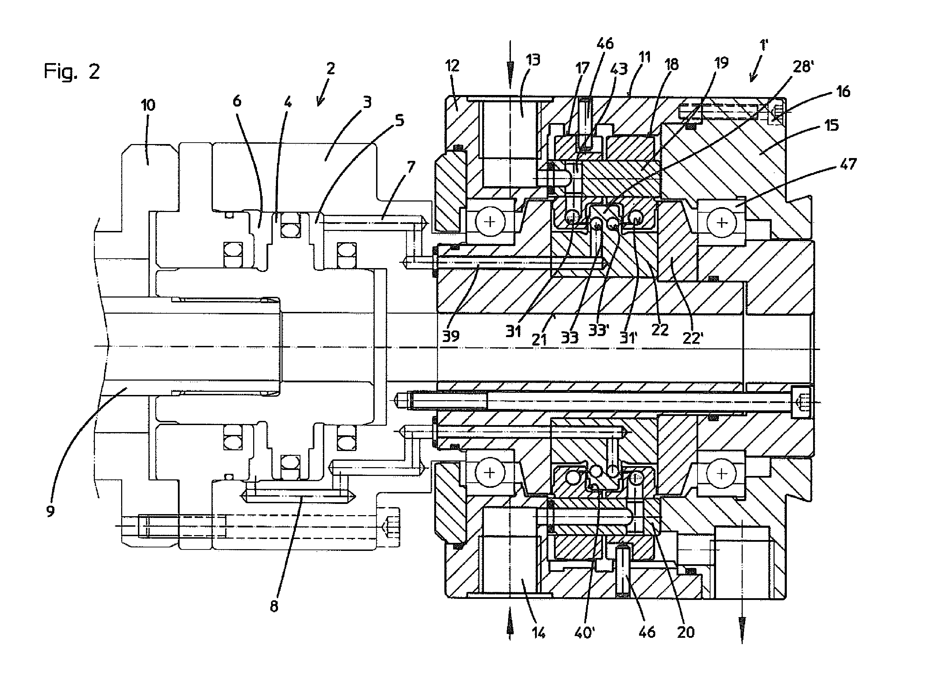

Die in den Figuren 1 und 2 dargestellte und mit 1 bzw. 1' bezeichnete Einrichtung dient zur Übertragung eines bzw. zweier Medien, beispielsweise eines Druckmittels aus einem ortsfest angeordneten ersten Bauteil 11 in ein rotierend antreibbares zweites Bauteil 21, das, wie dies insbesondere der Figur 2 zu entnehmen ist, mit einem Spannzylinder 2 verbunden ist. Das erste Bauteil 11 ist hierbei als Zuführungsring 12 ausgebildet, an den bei einer beidseitig Beaufschlagung eines in einen Zylinder 3 eingesetzten Kolbens 4 zwei Zuführungsleitungen 13 und 14 angeschlossen sind. Dem Kolben 4 sind Druckräume 5 und 6 zugeordnet, denen das Medium über in den Zylinder 3 eingearbeitete Kanäle 7 oder 8 wechselweise zuführbar ist. Über eine Zugstange 9, die in den Kolben 4 angeschraubt und in einer Maschinenspindel 10 verschiebbar geführt ist, sind die Spannbacken eines nicht gezeigten Kraftspannfutters betätigbar.

Bei einer Zuführung des Mediums zu einem doppelseitig beaufschlagbaren Aggregat, wie dies in Fig. 2 dargestellt ist, ist jeder der an den Zuführungsring 12 des Bauteils 11 angeschlossenen Zuführungsleitungen 13 und 14 einer Ringscheibe 17 bzw. 18 zugeordnet, die jeweils auf einem Bolzen 19 bzw. 20 axial verschiebbar gelagert sind. Mittels eines Deckels 15, der mit dem Zuführungsring 12 durch Schrauben 16 fest verbunden ist, sind die Bolzen 19 und 20 zwischen diesen axial fixiert. Außerdem sind die Ringscheiben 17 und 18 jeweils durch radial gerichtete Bolzen 46, die in dem Zuführungsring 12 eingesetzt sind und die in in die Ringscheiben 17 und 18 eingearbeitete Längsnuten 45 eingreifen, drehfest an dem Zuführungsring 12 abgestützt. Mittels Wälzlagers 47 sind der Zuführungsring 12 und der Deckel 15 drehbar auf dem zweiten Bauteil 21 gelagert.

Die Ringscheiben 17 und 18 sind jeweils mit axialem und radialem Spiel in das zweite Bauteil 21 eingreifend auf den Bolzen 19 bzw. 20 angeordnet, so dass beiderseits der Ringscheiben 17 und 18, wie dies der vereinfachten Darstellung gemäß Fig. 1 zu entnehmen ist, jeweils ein erster Dichtspalt 41 und auf den gegenüberliegenden Seite ein zweiter Dichtspalt 42 gebildet sind. Außerdem ist vor dem zweiten Dichtspalt 42 eine Regelkammer 24, die einen Druckraum 25 sowie eine an der Ringscheibe 17 bzw. 18 vorgesehene Druckfläche 26 aufweist, ausgebildet, die über einen Ringkanal 27, der durch eine in das zweite Bauteil 21 eingearbeitete ringförmige Aufnahmenut 23 geschaffen ist, an den ersten Dichtspalt 41 angeschlossen ist.

Das zweite Bauteil 21 besteht bei dem dargestellten Ausführungsbeispiel aus einer Hohlwelle 22 und einer Scheibe 22', die einen abstehenden in eine Freisparung 40 der Ringscheibe 17 eingreifenden Ansatz 48 aufweist. Durch einen Deckel 29, der mittels Schrauben 30 mit der Hohlwelle 22 fest verbunden ist, ist die Scheibe 22' mit der Hohlwelle 22, in die jeweils ein Stift 30' zur lagerorientierten Ausrichtung eingesetzt ist, verspannt.

Zur unmittelbaren Übertragung des Mediums aus der Ringscheibe 17 bzw. 18 in das zweite Bauteil 21 sind in diese Ringkammern 31 und 33 bzw. 31' und 33' eingearbeitet, die als rundum nahezu geschlossene Ringräume 32 und 34 ausgebildet sind. Über Ringspalte 35 und 36 sind die Ringkammern 31 und 33 ständig mit dem ersten Dichtspalt 41 verbunden. Zur Zuführung des Mediums in die Ringkammer 31 sind in den Bolzen 19 und die Ringscheibe 17 Kanäle 43 bzw. 44 eingearbeitet, die an die Zuführungsleitung 13 angeschlossen sind. Das in das Bauteil 21 zu übertragende Medium kann somit von der Zuführungsleitung 13, die Kanäle 43 und 44 in die Ringkammer 31 einströmen, von der es durch den Dichtspalt 35 und den Dichtspalt 36 in die Ringkammer 33 übertritt. Über einen an die Ringkammer 33 angeschlossenen Kanal 39 kann das Medium sodann in den Kanal 7 und in den Druckraum 5 des Spannzylinders 2 gelangen. Das aus den Dichtspalten 41 und 42 seitlich austretende Medium strömt über zwischen den beiden Bauteilen 11 und 21 sich zwangsläufig ergebende Kanäle, wie beispielsweise über die Ausnehmung 40, ab und kann aufgefangen werden.

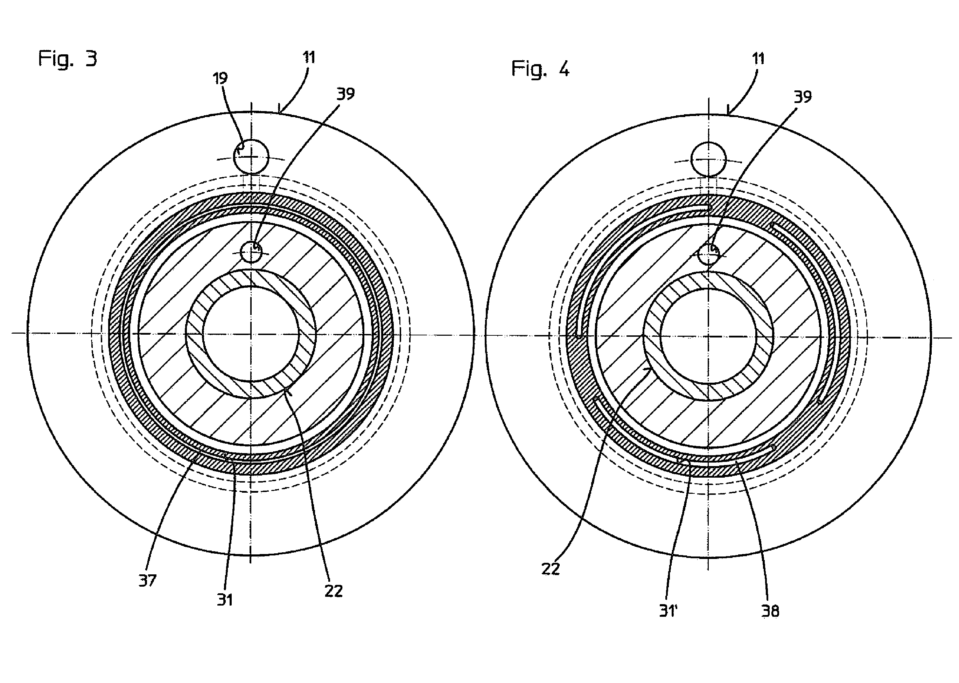

Die Ringspalte 35 und/oder 36 können, wie dies der Figur 3 zu entnehmen ist, als umlaufende schlitzförmige Durchbrechung 37 ausgebildet sein. Es ist aber gemäß Figur 4 auch möglich, die Ringspalte 35 und/oder 36 durch mehrere segmentartige Ausnehmungen 38, die gleichmäßig über den Umfang verteilt anzuordnen sind, zu bilden. Auch sollte die Querschnittsfläche der Durchbrechung 37 der Gesamtsumme der Querschnittsflächen der Öffnungen 38 entsprechen, so dass diese in ihrer Breite größer zu bemessen sind als die Breite der Durchbrechung 37. Des Weiteren sollten die durchströmten Querschnittsflächen der Dichtspalte 35 und 36 auf die Querschnittsflächen der Ringkammern 31 und 33 sowie der Kanäle 43 in den Bolzen 19 bzw. 20 und der Zuführungsleitung 13 abgestimmt und jeweils etwa gleich groß bemessen sein, um Strömungswiderstände gering zu halten.

Wird über die Zuführungsleitung 13 der Ringkammer 31 das zu übertragende Medium zugeführt - bei einer Zuführung über die Zuführungsleitung 14 erfolgt ein analoger Aufbau und Verfahrensablauf - strömt dieses durch den Ringspalt 35 dem ersten Dichtspalt 41 zu und von diesem durch den Ringspalt 36 in die in dem zweiten Bauteil 21 vorgesehene Ringkammer 33. Dabei entsteht in der Ringkammer 31 in Höhe des Ringspaltes 35 in Abhängigkeit von dessen projizierter Fläche eine Kraft, die in Richtung des zweiten Dichtspaltes 42 auf die Ringscheibe 15 einwirkt. Außerdem wird in dem ersten Dichtspalt 41 in Abhängigkeit von der Größe der den ersten Dichtspalt 41 begrenzenden Flächen eine Kraft aufgebaut, durch die die Ringscheibe 17 ebenfalls nach links in Richtung des zweiten Dichtspaltes 42 verschoben wird.

Gleichzeitig strömt aber auch das Medium über einen Ringkanal 27 von dem ersten Dichtspalt 31 in den Druckraum 25 der Regelkammer 24. Da der zweite Dichtspalt 42 geschlossen ist, wird eine Kraft aufgebaut, die der durch die projizierte Fläche des Ringspaltes 35 und die Flächen des ersten Dichtspaltes 34 hervorgerufenen Kräfte entgegen wirkt. Die Ringscheibe 15 wird somit bei einer Mediumzuführung ständig in die eine oder andere Richtung verschoben, d.h. die Ringscheibe 15 pendelt geringfügig hin und her. Eine Anlage an dem zweiten Bauteil 21 unter Druck erfolgt demnach nicht, so dass Beschädigungen im Bereich des ersten und zweiten Dichtspaltes 41 und 42 nahezu ausgeschlossen sind.

Der erste Dichtspalt 41 ist hierbei durch den in diesen mündenden Ringspalt 35 derart unterteilt, dass die diesen begrenzende radial innere Fläche gleich oder kleiner bemessen ist als dessen radial äußere Fläche. Das Medium kann somit rasch in den Ringkanal 27 gelangen. Und da die von dem Medium beaufschlagte Fläche des Druckraumes 25 der Regelkammer 24 gleich oder größer bemessen ist als die Dichtflächen des ersten Dichtspaltes 41, werden die Pendelbewegungen, da die Kraftrichtungen jeweils kurzfristig umkehrbar sind, unterstützt.

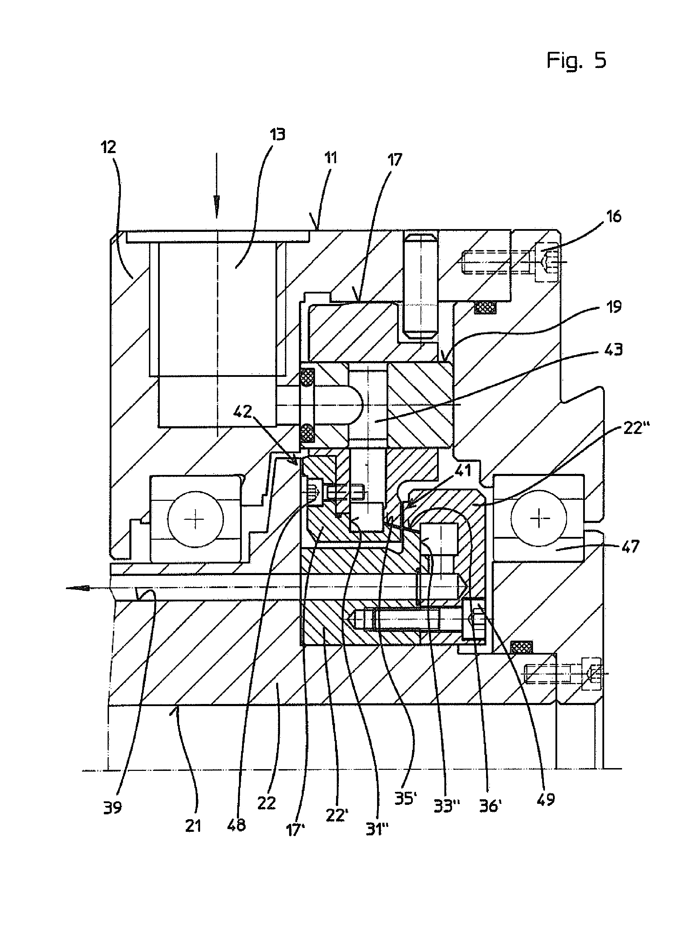

Die Ringspalte 35 und 36 münden jeweils in radial gleicher Höhe in den ersten Dichtspalt 31 und verlaufen bei der Ausgestaltung nach den Figuren 1 und 2 achsparallel zu den Längsachsen der Bauteile 11 und 12. Gemäß Figur 5 können die Dichtspalte 35' und 36' aber auch in Achsrichtung geringfügig geneigt verlaufend ausgebildet werden.

Bei der in den Figuren 1 und 2 dargestellten Einrichtung 1 bzw. 1' sind die Ringscheibe 17 und der mit der Ringkammer 33 versehene Ring 22' des zweiten Bauteils 21 jeweils einstückig als Feingussteil hergestellt, und die Ringkammern 31 und 33 sind nach dem Wachsausschmelzverfahren in diese eingeformt.

Gemäß den Figuren 5, 6, und 7 können die Ringscheibe 17 und der Ring 22' im Bereich der Ringkammern 31" und 33" aber auch unterteilt sein, um die Ringkammern 31" und 33", die bei diesen Ausführungsvarianten rechteckig bzw. oval gestaltet sind, mechanisch bearbeiten zu können. Mittels Schrauben 48 bzw. 49 sind die Bauteile 17' bzw. 22" mit der Ringscheibe 17 bzw. mit der Scheibe 22' in Einbaulage fest verbunden.

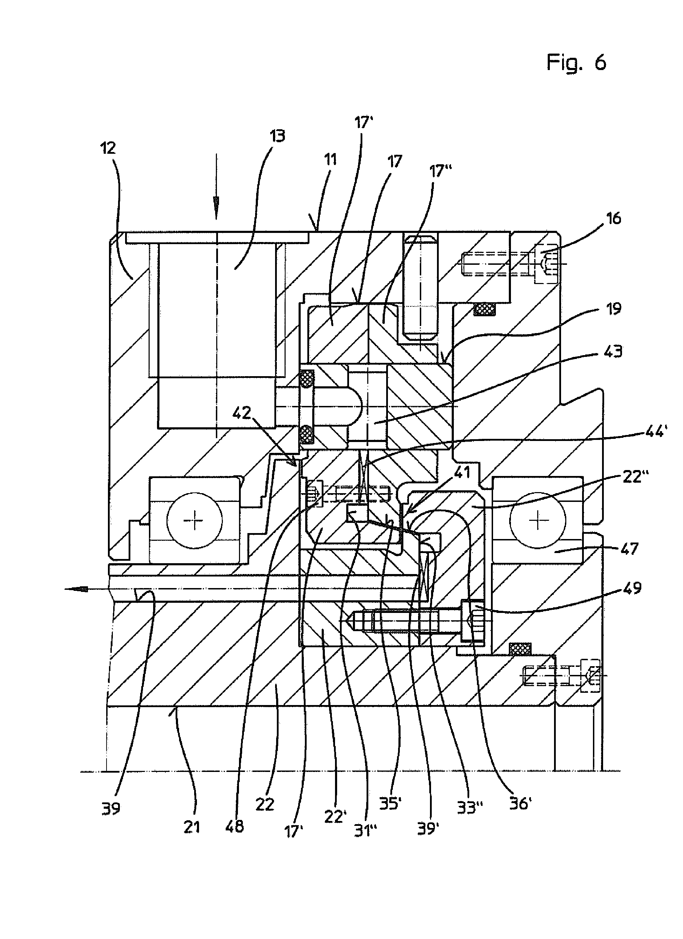

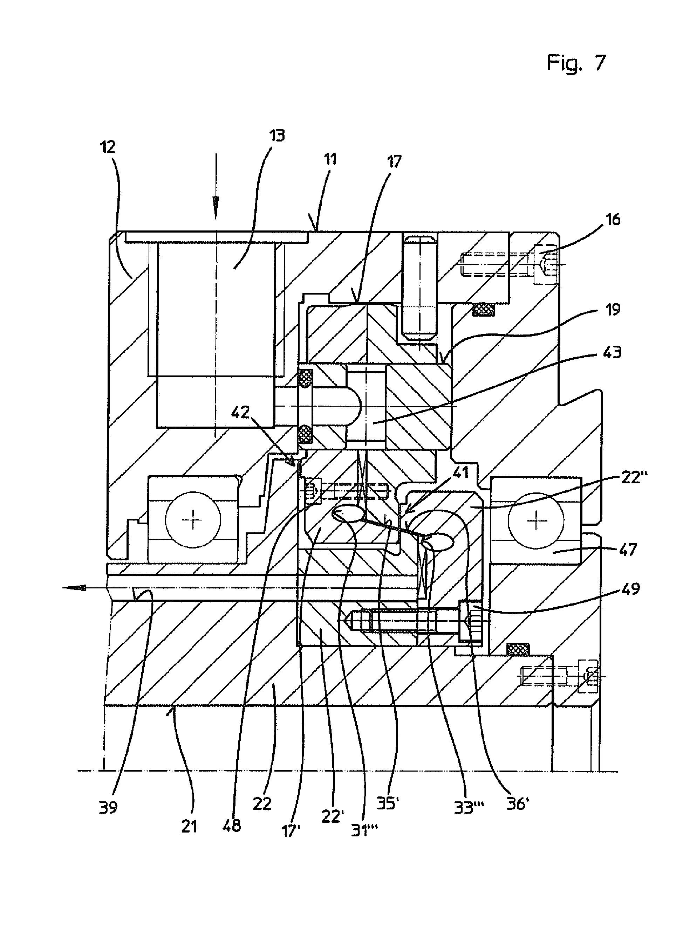

Bei den Ausführungsvarianten nach den Figuren 6 und 7 ist die Ringscheibe 17 vertikal senkrecht zur Längsachse des zweiten Bauteils 21 im Bereich des in die Ringkammer 31" mündenden Kanal 43, das zweite Bauteil im Bereich des von der zweiten Ringkammer 33" abführenden Kanals 39' unterteilt ausgebildet. Außerdem sind der in die Ringkammer 31" führende Kanal 44' und der von der Ringkammer 33' abführende Kanal 39' jeweils in eine der Stirnflächen der aneinanderliegenden Bauteile in Form von offenen Freisparungen eingearbeitet. Selbstverständlich ist es auch möglich, die Ringkammern mit dreieckigem oder polygonem Querschnitt auszustatten, ohne dass dadurch deren Funktion verändert wird.

Bei der Einrichtung 1' nach Figur 2 sind die beiden Ringscheiben 17 und 18, um das den Kolben 4 beaufschlagende Medium wechselweise den Druckräumen 5 und 6 zuführen zu können, nebeneinander angeordnet und, wie auch der Ring 22 des zweiten Bauteils 21, in etwa spiegelbildlich gestaltet. Die beiden Ringscheiben 17 und 18 bilden somit eine gemeinsame Freisparung 40', in die ein von dem Ring 22 radial abstehender Ansatz 28'hineinragt. Auf diese Weise ist eine kompakte Bauweise der zur wechselseitigen Übertragung zweier Medien vorgesehenen Einrichtung 1' gegeben.

## Patentansprüche

1. Einrichtung (1) zur Übertragung eines Mediums aus mindestenes einer Zuführungsleitung zu einem durch dieses beaufschlagbaren Aggregat, beispielsweise zu einem umlaufenden Spannzylinder (2), einem Kraftspannfutter oder dergleichen, bestehend aus einem an die Zuführungsleitung (13, 14) angeschlossen, ortsfest angeordneten, als Zuführungsring (12) ausgebildeten ersten Bauteil (11) und einem zweiten Bauteil (21), das mit axialen und radialem Spiel pendelnd in dem ersten Bauteil (11) gelagert ist, wobei zwischen den beiden Bauteilen (11, 21) ein erster und ein zweiter radial gerichteter Dichtspalt (41, 42) vorgesehen sind, das Medium aus einer umlaufenden Ringkammer (31, 33) im Bereich des ersten Dichtspaltes (41) aus dem ersten Bauteil (11) dem zweiten Bauteil (21) zuführbar und vor dem zweiten Dichtspalt (42) eine mit der Ringkammer (31) verbindbare, mit einem Druckraum (25) ausgestattete Regelkammer (24) vorgesehen ist,
**dadurch gekennzeichnet,**
**dass** die mit der Zuführungsleitung (13, 14) verbundene Ringkammer (31) in einer gesonderten, gegenüber dem Zuführungsring (12) axial verschiebbar abgestützten Ringscheibe (17, 18) eingearbeitet und als geschlossener Ringraum (32) ausgebildet ist, dass der Ringraum (32) der Ringkammer (31) über einen oder mehrere in die Ringscheibe (17) eingearbeiteten Ringspalte (35) an den ersten Dichtspalt (41) angeschlossen ist, und dass in dem zweiten Bauteil (21) eine weitere, durch einen Ringraum (34) gebildete geschlossene Ringkammer (33) vorgesehen ist, die über einen oder mehrere Ringspalte (36) mit dem ersten Dichtspalt (41) verbunden ist.

2. Druckmittelzuführungseinrichtung nach Anspruch 1,
**dadurch gekennzeichnet,**
**dass** die Ringräume (32, 34) der Ringkammern (31, 33) jeweils eine geometrische od. polygone Querschnittsfläche aufweisen und z. B. kreisförmig, oval, dreieckig, rechteckig, vorzugsweise quadratisch, oder mehreckig ausgebildet sind.

3. Druckmittelzuführungseinrichtung nach Anspruch 1 und 2,
**dadurch gekennzeichnet,**
**dass** die an die Ringkammern (31, 33) angeschlossenen Dichtspalte (41, 42) parallel zur Längsachse des ersten und zweiten Bauteils (11, 21) verlaufend oder geringfügig in Achsrichtung nach innen oder außen geneigt angeordnet sind.

4. Druckmittelzuführungseinrichtung nach Anspruch 3,
**dadurch gekennzeichnet,**
**dass** die Ringspalte (35, 36) in radialer Richtung jeweils etwa auf gleicher Höhe in den ersten Dichtspalt (41) münden.

5. Druckmittelzuführungsreinrichtung nach einem der Ansprüche 1 bis 4,
**dadurch gekennzeichnet,**
**dass** die in die Ringscheibe (17, 18) und/oder das zweite Bauteil (21) eingearbeiteten Ringspalte (35, 36) als in Umfangsrichtung verlaufende schlitzförmige Durchbrechungen (37) oder in Form von vorzugsweise gleichmäßig über den Umfang verteilt angeordnete segmentartige Ausnehmungen (38) ausgebildet sind.

6. Druckmittelzuführungseinrichtung nach einem der Ansprüche 1 bis 5,
**dadurch gekennzeichnet,**
**dass** der erste Dichtspalt (41) durch den in diesen mündenden Ringspalt (35) derart unterteilt ist, dass die den Dichtspalt (41) begrenzenden radial inneren Flächen gleich oder kleiner bemessen sind als dessen radial äußere Flächen.

7. Druckmittelzuführungseinrichtung nach einem der Ansprüche 1 bis 6,
**dadurch gekennzeichnet,**
**dass** die von dem Medium beaufschlagte Fläche des der Regelkammer (24) zugeordneten Druckraums (25) gleich oder größer bemessen ist als die Dichtflächen des ersten Dichtspaltes (41).

8. Druckmittelzuführungseinrichtung nach einem der Ansprüche 1 bis 7,
**dadurch gekennzeichnet,**
**dass** die von dem Medium durchströmten Querschnittsflächen der Zuführungsleitungen (13, 14, 43, 44) der Ringkammern (31, 33) und der Dichtspalte (35, 36) jeweils etwa gleich groß bemessen sind.

9. Druckmittelzuführungseinrichtung nach einem der Ansprüche 1 bis 8,
**dadurch gekennzeichnet,**
**dass** in die Ringscheiben (17, 18) eine umlaufende Freisparung (40) oder eine Aufnahmenut (40') für einen an dem zweiten Bauteil (21) angeformten, radial abstehenden Ansatz (28) eingearbeitet ist und dass in Höhe der Freisparung (40), bei einem beidseitig von dem Medium beaufschlagten Aggregat in Höhe der Aufnahmenut (40'), Ringkammern (31, 33) in der Ringscheibe (17) und dem Ansatz (28) vorgesehen sind, die über Ringspalte (35, 36) mit dem von der Ringscheibe (17, 18) und dem Ansatz (28) eingeschlossenen ersten Dichtspalt (41) verbunden sind.

10. Druckmittelzuführungseinrichtung nach einem der Ansprüche 1 bis 9,
**dadurch gekennzeichnet,**
**dass** die mit der Ringkammer (31) versehene Ringscheibe (17) mittels eines in eine in diese eingearbeiteten Längsnut (45) eingreifenden Stiftes (46) drehfest an dem ersten Zuführungsring (12) abgestützt ist.

11. Druckmittelzuführungseinrichtung nach einem der Ansprüche 1 bis 10,
**dadurch gekennzeichnet,**
**dass** zur Zuführung des Mediums in die Ringscheibe (17) in diese ein Bolzen (19) eingesetzt ist, der in dem ersten Bauteil (11) eingespannt und mit an die Zuführungsleitung (13) und die Ringkammer (31) angeschlossenen Kanäle (43) versehen ist.

12. Druckmittelzuführungseinrichtung nach einem der Ansprüche1 bis 11,
**dadurch gekennzeichnet,**
**dass** die Ringscheibe (17) und/oder ein Teil des zweiten Bauteils (21) als Feingussteile ausgebildet und dass die in der Ringscheibe (17) und/oder dem zweiten Bauteil (21) vorgesehenen Ringkammern (31, 33) mit Hilfe des Wachs-Ausschmelzverfahrens in diese eingeformt sind.

13. Druckmittelzuführungseinrichtung nach einem der Ansprüche 1 bis 11,
**dadurch gekennzeichnet,**
**dass** zur Einarbeitung der in der Ringscheibe (17) und/oder dem zweiten Bauteil (21) vorgesehenen Ringkammern (31, 33) die Ringscheibe (17) und/oder das zweite Bauteil (21) im Bereich der Ringkammern (31, 33) unterteilt ausgebildet sind.

14. Druckmittelzuführungseinrichtung nach Anspruch 13,
**dadurch gekennzeichnet,**
**dass** die Ringscheibe (17) vertikal, vorzugsweise senkrecht zur Längsachse des diese tragenden zweiten Bauteils (21) im Bereich des in die erste Ringkammer (31 ") mündenden Kanals (43) unterteilt ausgebildet ist.

15. Druckmittelzuführungseinrichtung nach Anspruch 13,
**dadurch gekennzeichnet,**
**dass** das zweite Bauteil (21) im Bereich der von der zweiten Ringkammer (33") abführenden Kanals (39) unterteilt ausgebildet ist.

16. Druckmittelzuführungseinrichtung nach Anspruch 14 oder 15,
**dadurch gekennzeichnet,**
**dass** der zu der ersten Ringkammer (31) führende Kanal (44') und/oder der von der zweiten Ringkammer (33) abführende Kanal (39') jeweils in eine der Stirnflächen der aneinanderliegenden Teile (17', 17") der Ringscheibe (17) bzw. des zweiten Bauteils (21) als offene Freisparungen eingearbeitet sind.
